# EUROPÄISCHE PATENTSCHRIFT

(11) **EP 4 526 984 B1**
(45) Veröffentlichungstag und Bekanntmachung des Hinweises auf die Patenterteilung: **07.05.2025**
(21) Anmeldenummer: 23718205.0
(22) Anmeldetag: 05.04.2023
(51) Int. Cl.: H02K 11/20, H02K 15/16

(54) **ELEKTRISCHE MASCHINE MIT EINER ÜBERWACHUNGSEINRICHTUNG UND VERFAHREN ZUR ÜBERWACHUNG**
ELECTRIC MACHINE COMPRISING A MONITORING DEVICE, AND MONITORING METHOD
MACHINE ÉLECTRIQUE COMPRENANT UN DISPOSITIF DE SURVEILLANCE ET PROCÉDÉ DE SURVEILLANCE

(30) Priorität: 18.05.2022 DE 102022112452
(43) Veröffentlichungstag der Anmeldung: 26.03.2025
(73) Patentinhaber: Voith Patent GmbH, 89522 Heidenheim (DE)
(72) Erfinder: SCHWARZ, Babette, 89428 Syrgenstein (DE); JUNG, Alexander, 73547 Lorch (DE)
(74) Vertreter: Voith Patent GmbH - Patentabteilung
(86) Internationale Anmeldenummer: PCT/EP2023/058927
(87) Internationale Veröffentlichungsnummer: WO 2023/222300

(56) Entgegenhaltungen:
- EP-B1- 3 857 687
- WO-A1-2017/157679
- DE-A1- 102010 009 663

## Beschreibung

Die Erfindung betrifft eine große elektrische Maschine mit einer Überwachungseinrichtung zur Überwachung des Luftspaltes der elektrischen Maschine und zur Überwachung des Schwingungsverhalten der elektrischen Maschine und entsprechende Verfahren zur Überwachung. Bei der elektrischen Maschine kann es sich beispielsweise um einen Generator oder Motor-Generator für ein Wasserkraftwerk handeln.

Elektrische Maschinen mit einer Überwachungseinrichtung sind aus dem Stand der Technik bekannt. So offenbart beispielsweise die WO 2017/157679 A1 eine elektrische Maschine mit einer Überwachungseinrichtung, welche ein Mikrowellen-Radarsystem umfasst, um die Weite des Luftspaltes zu überwachen. Dabei ist die Antenne des Mikrowellen-Radarsystems so angeordnet, dass ihre Mündung mit einer Seite des zu überwachenden radialen Luftspaltes abschließt. Dazu kann die Antenne in einem Lüftungsschlitz des Stators der elektrischen Maschine angeordnet sein.

Die Aufgabe der Erfindung ist es, eine elektrische Maschine mit einer Überwachungseinrichtung anzugeben, welche einfacher aufgebaut ist als die aus dem Stand der Technik bekannte Überwachungseinrichtung, und welche neben der Luftspaltüberwachung auch zur Überwachung des Schwingungsverhalten der elektrischen Maschine verwendet werden kann.

Die Aufgabe wird erfindungsgemäß durch eine Ausführung entsprechend den unabhängigen Ansprüchen gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: FMCW-Radarsystem
- Fig.2: Erfindungsgemäße elektrische Maschine
- Fig.3: Erfindungsgemäße elektrische Maschine

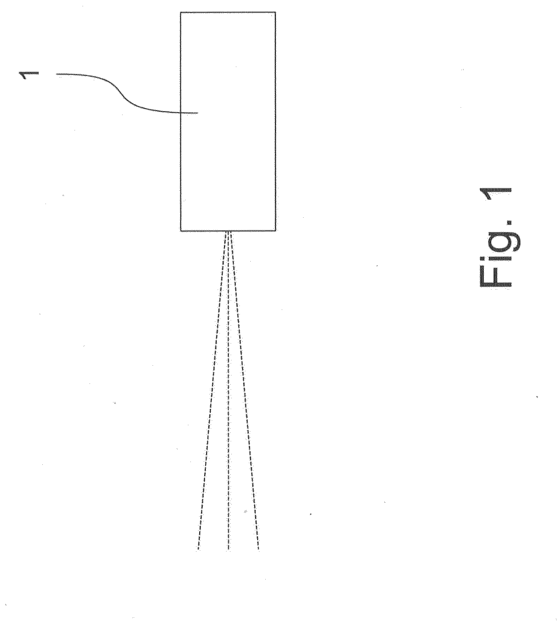

Figur 1 zeigt ein FMCW-Radarsystem in stark schematisierter Darstellung, welches mit 1 bezeichnet ist. Ein FMCW-Radarsystem umfasst üblicherweise einen Transceiver mit einer Sende- und einer Empfangsantenne und eine Steuereinrichtung. Dabei kann die Sende- und die Empfangsantenne separat als zwei einzelne Antennen oder integral als eine Antenne ausgeführt sein, die sowohl die Sende- als auch die Empfangsfunktion ausführen kann. Die Steuereinrichtung umfasst üblicherweise einen Mikroprozessor, der den Transceiver steuert, das Empfangssignal verarbeitet und die Verbindung zu einem Computer sicherstellt, der ebenfalls Teil des FMCW-Radarsystems ist. Ein FMCW-Radarsystem zeichnet sich dadurch aus, dass sowohl die absolute Entfernung eines Objektes als auch die zeitliche Änderung der Entfernung, d.h. die Geschwindigkeit des Objektes mit hoher Genauigkeit gemessen werden können.

Das in Figur 1 dargestellte Rechteck kann alle Komponenten des FMCW-Radarsystems enthalten oder nur einen Teil der Komponenten. In der Regel wird wenigstens der Computer eine separate Einheit darstellen. Die gestrichelten Linien in Figur 1 deuten den Strahlungskegel des Radarsystems an, d.h. die Abstrahlcharakteristik der Sendeantenne.

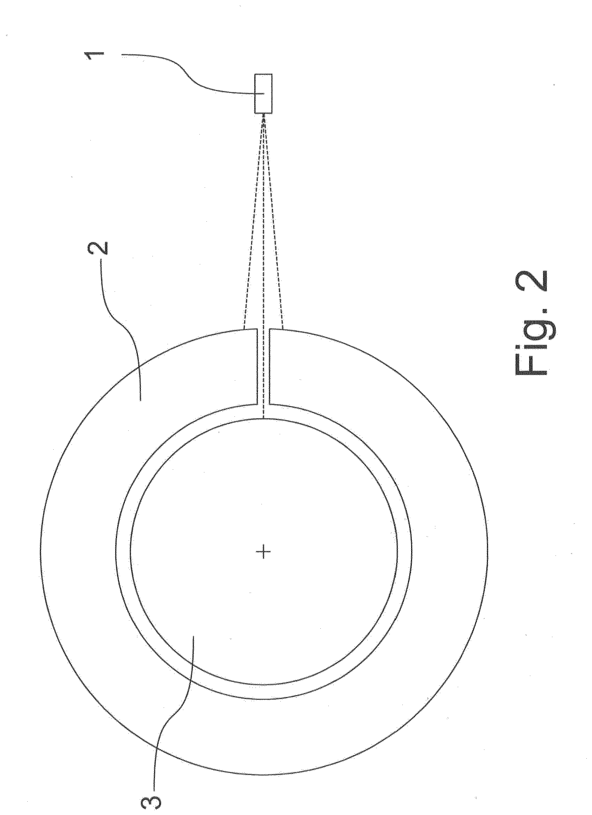

Figur 2 zeigt eine erfindungsgemäße elektrische Maschine in stark schematisierter Darstellung in einer Ansicht in Richtung der Drehachse der elektrischen Maschine, welche durch das kleine Kreuz angedeutet ist. Die elektrische Maschine umfasst einen Stator, welcher mit 2 bezeichnet ist, und einen Rotor, welcher mit 3 bezeichnet ist. Die elektrische Maschine umfasst ferner ein FMCW-Radarsystem 1 zur Überwachung der elektrischen Maschine, welches so angeordnet, dass es einen Teil des Stators 2 und einen Teil des Rotors 3 erfassen kann, wobei die von dem Radarsystem 1 ausgesendeten Strahlen und die vom Rotor 3 reflektierten Strahlen einen Luftspalt zwischen dem radial äußeren Rand des Rotors 3 und dem radial inneren Rand des Stators 2 in radialer Richtung durchdringen. Es deuten dabei die gestrichelten Linien wiederum den Strahlungskegel des Radarsystems 1 an. Es ist ersichtlich, dass sich innerhalb des Strahlungskegels ein Teil des Stators 2 und ein Teil des Rotors 3 befindet. Da der Stator 2 den Rotor 3 in radialer Richtung umgibt, muss der Stator 2 dazu eine geeignete Öffnung aufweisen, so dass die vom Radarsystem 1 ausgesandten Strahlen durch die Öffnung auf den Rotor 3 treffen können. Die reflektierten Strahlen gelangen auf demselben Weg zurück zur Empfangsantenne des Radarsystems 1. Bei dem vom Radarsystem 1 erfassen Teilen des Stators 2 handelt es sich um einen Teil des radial äußeren Randes des Stators 2, und bei dem vom Radarsystem 1 erfassten Teilen des Rotors 3 handelt es sich um einen Teil des radial äußeren Randes des Rotors 3. Bei der Öffnung kann es sich beispielsweise um einen Lüftungsschlitz handeln. Solche Lüftungsschlitze durchdringen bei vielen großen elektrischen Maschinen den Stator 2 meist in radialer Richtung.

Unter dem Begriff "Stator" werden in diesem Dokument alle nicht rotierenden Teile der elektrischen Maschine verstanden, d.h. z.B. auch ein Gehäuse, das ggf. das Blechpaket der rotierenden Maschine umgibt. Dabei kann sich das Radarsystem auch innerhalb des Stator-Gehäuses befinden und einen weiter innen liegenden Teil des Stators erfassen.

Die Erfinder haben erkannt, dass mit der in Figur 1 gezeigten Anordnung eine Überwachung der Weite des Luftspaltes der elektrischen Maschine ermöglicht wird. Das wie in Figur 1 gezeigt angeordnete FMCW-Radarsystem kann sowohl den Abstand zum erfassten Teil des Stators 2 als auch den Abstand zum radial äußeren Rand des Rotors 3 messen. Zwischen diesen Teilen erstreckt sich wenigstens ein Teil des Stators 2 und der Luftspalt, d.h. der radiale Zwischenraum zwischen dem radial inneren Rand des Stators 2 und dem radial äußeren Rand des Rotors 3. Da es sehr unwahrscheinlich ist, dass sich die Dimension des Stators 2 mit der Zeit ändert, kann aus einer Änderung der Differenz der genannten Abstände mit großer Sicherheit auf eine Änderung der Luftspaltweite geschlossen werden. Eine Änderung der Luftspaltweite kann mehrere Ursachen haben. Beispielsweise könnte sich die Drehachse des Rotors 3 seitlich verlagern oder auch kippen. Dies würde sich in einer zeitlichen Änderung der Abstandsdifferenz hin zu größeren oder kleineren Werten niederschlagen, je nachdem in welche Richtung die Verlagerung oder Kippung der Drehasche erfolgt. Zur Detektion von auf diese Weise verursachten Änderungen der Luftspaltweite können vorteilhaft mehr als ein FMCW-Radarsystem eingesetzt werden. Beispielsweise könnte gegenüber dem dargestellten FMCW-Radarsystem ein weiteres Radarsystem angeordnet sein. Oder es könnte ein weiteres Radarsystem vorgesehen sein, welches um 90° um die Rotationsachse des Rotors 3 gedreht angeordnet ist.

Eine weitere Ursache besteht darin, dass sich Teile des Rotors infolge der auf sie einwirkenden Fliehkräfte radial nach außen verlagern. Das würde in jedem Fall zu einer Verkleinerung der Abstandsdifferenz führen. Zur Detektion von auf diese Weise verursachten Änderungen der Luftspaltweite genügt ein einzelnes Radarsystem wie in Figur 2 dargestellt.

Das erfindungsgemäße Verfahren zur Überwachung der Weite des Luftspaltes umfasst also folgende Schritte:
- Messen eines Abstandes zum erfassten Teil des Stators 2
- Messen eines Abstandes zum äußeren Rand des Rotors 3
- Vergleich der Differenz der gemessenen Abstände mit vordefinierten Grenzwerten

Dabei bilden die vordefinierten Grenzwerte einen Toleranzbereich. Solange sich die Differenz im Toleranzbereich befindet, hat sich die Weite des Luftspaltes nicht in einer kritischen Weise verändert. Wenn die beschriebene erfindungsgemäße Überwachungseinrichtung auf diese Weise eine Änderung der Luftspaltweite erfasst, welche einen sicheren Betrieb der Maschine nicht mehr gewährleistet, dann kann dieselbe eine Warnungsmeldung erzeugen und/oder das Stillsetzen der elektrischen Maschine veranlassen.

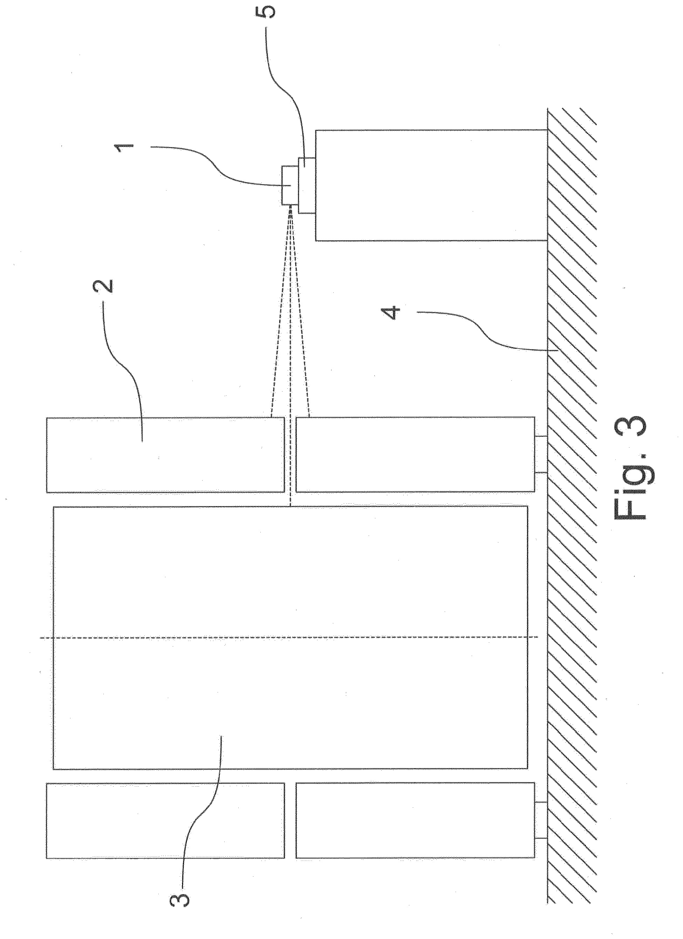

Die Erfinder haben erkannt, dass die erfindungsgemäße Anordnung auch eine Schwingungsüberwachung der elektrischen Maschine ermöglicht. Dies wird dadurch ermöglicht, dass das FMCW-Radarsystem auch Geschwindigkeiten messen kann. Dabei liegt das Geschwindigkeitsband, dass gemessen werden kann, in einem Bereich, der für die Erfassung von bei großen elektrischen Maschinen zu erwartenden Schwingungen günstig ist. Die Schwingungsüberwachung wird anhand von Figur 3 näher erläutert, welche eine Ausführungsform zeigt, welche besonders vorteilhaft für die Schwingungsüberwachung geeignet ist.

Figur 3 zeigt eine weitere Ausführungsform einer erfindungsgemäßen elektrischen Maschine in stark schematisierter Darstellung in einer Ansicht senkreche zur Drehachse der elektrischen Maschine, welche durch die gestrichelte vertikale Linie angedeutet ist. Zur Vereinfachung wurde dabei auf eine Darstellung der Lagerung des Rotors 3 verzichtet. Die Bezeichnungen entsprechen den Bezeichnungen von Figur 2. Der Stator 2 ist mit einem Fundament verbunden, welches mit 4 bezeichnet ist. Üblicherweise wäre auch die in Figur 3 nicht dargestellte Lagerung des Rotors 3 wenigstens mittelbar mit dem Fundament 4 verbunden. Auch das FMCW-Radarsystem 1 ist mit dem Fundament 4 verbunden. Zwischen dem FMCW-Radarsystem 1 und dem Fundament 4 ist dabei eine Schwingungsentkopplung angeordnet, welche mit 5 bezeichnet ist. Durch diese Anordnung wird eine unverfälschte Erfassung der Schwingungen sowohl des Rotors 3 als auch des Stators 2 durch die Überwachungseinrichtung ermöglicht, da durch die Schwingungsentkopplung 5 eine Übertragung der Schwingungen der elektrischen Maschine über das Fundament 4 auf das Radarsystem 1 vermieden werden kann.

In Figur 3 ist die Schwingungsentkopplung 5 zwischen dem Radarsystem 1 und einem als Rechteck dargestellten Podest angeordnet. Genauso gut könnte die Schwingungsentkopplung zwischen dem Podest und dem Fundamten 4 angeordnet sein.

Das erfindungsgemäße Verfahren zur Schwingungsüberwachung umfasst also folgende Schritte:
- Messen einer Schwingung des Rotors 3 und/oder des Stators 2 mit Hilfe des Radarsystems 1
- Vergleich der gemessenen Schwingungswerte mit vordefinierten Grenzwerten Wenn die beschriebene erfindungsgemäße Überwachungseinrichtung auf diese Weise ein Schwingungsverhalten der elektrischen Maschine erfasst, welches ein vordefiniertes Maß überschreitet, dann kann dieselbe eine Warnungsmeldung erzeugen und/oder das Stillsetzen der elektrischen Maschine veranlassen. Dabei können die vordefinierten Grenzwerte beispielsweise Schwingungsamplitudenwerte in bestimmten Frequenzbereichen sein. Es ist klar, dass die vordefinierten Grenzwerte für den Rotor 3 und den Stator 2 unterschiedlich sein können.

Die erfindungsgemäße elektrische Maschine mit einer Überwachungseinrichtung ist einfacher aufgebaut als aus dem Stand der Technik bekannt, da die Überwachungseinrichtung räumlich komplett getrennt von der elektrischen Maschine angeordnet ist, und daher der Eingriff in die elektrische Maschine minimal ist. Es muss lediglich pro eingesetztes Radarsystem eine geeignete Öffnung im Stator der elektrischen Maschine vorgesehen werden, wenn diese nicht ohnehin vorhanden ist.

Es ist klar, dass zur Ausführung der beschriebenen Verfahren ein Computersystem und ein die Verfahrensschritte ausführendes Computerprogramm benötigt werden. Das erfindungsgemäße Computerprogramm kann dabei auf einem Datenträger gespeichert sein.

### Bezugszeichenliste

- 1: FMCW-Radarsystem
- 2: Stator
- 3: Rotor
- 4: Fundament
- 5: Schwingungsentkopplung

## Patentansprüche

1. Elektrische Maschine umfassend einen Stator (2), einen Rotor (3) mit einer Drehachse und eine Überwachungseinheit, wobei die Überwachungseinheit ein Radarsystem (1) umfasst, **dadurch gekennzeichnet, dass** das Radarsystem (1) als FMCW-Radarsystem ausgebildet ist und so angeordnet ist, dass es einen Teil des Stators (2) und einen Teil des Rotors (3) erfassen kann, wobei der Stator (2) eine Öffnung aufweist, so dass vom Radarsystem (1) ausgehende Strahlen durch die Öffnung auf den Rotor (3) treffen können, und wobei die Strahlen einen Luftspalt zwischen einem radial äußeren Rand des Rotors (3) und einem radial inneren Rand des Stators (2) in radialer Richtung durchdringen.

2. Elektrische Maschine nach Anspruch 1, wobei die elektrische Maschine ein Fundament (4) umfasst, und der Stator (2) und das Radarsystem (1) mit dem Fundament (4) verbunden sind, und wobei zwischen Radarsystem (1) und Fundament (4) eine Schwingungsentkopplung (5) angeordnet ist.

3. Verfahren zur Überwachung einer elektrischen Maschine nach Anspruch 1 oder 2, wobei das Verfahren die folgenden Schritte umfasst:
- Messen eines Abstandes zum vom Radarsystem (1) erfassten Teil des Stators (2);
- Messen eines Abstandes zu einem äußeren Rand des Rotors (3);
- Vergleich der Differenz der gemessenen Abstände mit vordefinierten Grenzwerten;
wobei die Abstände mit Hilfe des Radarsystems (1) gemessen werden.

4. Verfahren nach Anspruch 3, wobei das Verfahren den folgenden Schritt umfasst:
- Ausgabe einer Warnmeldung und/oder Stillsetzen der elektrischen Maschine, wenn die Differenz einen vordefinierten Grenzwert überschreitet.

5. Verfahren zur Überwachung einer elektrischen Maschine nach Anspruch 1 oder 2, wobei das Verfahren die folgenden Schritte umfasst:
- Messung einer Schwingung des Rotors (3) und/oder des Stators (2) mit Hilfe des Radarsystems (1);
- Vergleich der gemessenen Schwingungswerte mit vordefinierten Grenzwerten;

6. Verfahren nach Anspruch 5, wobei das Verfahren den folgenden Schritt umfasst:
- Ausgabe einer Warnmeldung und/oder Stillsetzen der elektrischen Maschine, wenn ein gemessener Schwingungswert einen vordefinierten Grenzwert überschreitet.

## Claims

1. Electric machine comprising a stator (2), a rotor (3) with an axis of rotation and a monitoring unit, wherein the monitoring unit comprises a radar system (1), **characterised in that** the radar system (1) is designed as an FMCW radar system and is arranged such that it can detect a part of the stator (2) and a part of the rotor (3), wherein the stator (2) has an opening so that beams emanating from the radar system (1) can strike the rotor (3) through the opening, and wherein the beams penetrate an air gap between a radially outer edge of the rotor (3) and a radially inner edge of the stator (2) in the radial direction.

2. Electrical machine according to claim 1, wherein the electrical machine comprises a foundation (4), and the stator (2) and the radar system (1) are connected to the foundation (4), and wherein a vibration decoupler (5) is arranged between the radar system (1) and the foundation (4).

3. A method of monitoring an electrical machine according to claim 1 or 2, the method comprising the following steps:
- Measuring a distance to the part of the stator (2) detected by the radar system (1);
- measuring a distance to an outer edge of the rotor (3);
- comparing the difference between the measured distances with predefined limit values;
wherein the distances are measured with the aid of the radar system (1).

4. The method according to claim 3, wherein the method comprises the following step:
- issuing a warning message and/or stopping the electrical machine if the difference exceeds a predefined limit value.

5. A method of monitoring an electrical machine according to claim 1 or 2, the method comprising the following steps:
- Measuring a vibration of the rotor (3) and/or the stator (2) by means of the radar system (1);
- comparing the measured vibration values with predefined limit values;

6. The method according to claim 5, wherein the method comprises the following step:
- issuing a warning message and/or stopping the electrical machine when a measured vibration value exceeds a predefined limit value.

## Revendications

1. Machine électrique comprenant un stator (2), un rotor (3) avec un axe de rotation et une unité de surveillance, l'unité de surveillance comprenant un système radar (1), **caractérisée en ce que** le système radar (1) est conçu comme un système radar FMCW et est disposé de manière à pouvoir détecter une partie du stator (2) et une partie du rotor (3), dans lequel le stator (2) présente une ouverture, de sorte que des rayons partant du système radar (1) peuvent atteindre le rotor (3) à travers l'ouverture, et dans lequel les rayons traversent un entrefer entre un bord radialement extérieur du rotor (3) et un bord radialement intérieur du stator (2) dans la direction radiale.

2. Machine électrique selon la revendication 1, dans laquelle la machine électrique comprend une fondation (4), et le stator (2) et le système radar (1) sont reliés à la fondation (4), et dans laquelle un découplage de vibrations (5) est disposé entre le système radar (1) et la fondation (4).

3. Procédé de surveillance d'une machine électrique selon la revendication 1 ou 2, le procédé comprenant les étapes suivantes :
- Mesure d'une distance par rapport à la partie du stator (2) détectée par le système radar (1) ;
- Mesure d'une distance par rapport à un bord extérieur du rotor (3) ;
- comparaison de la différence entre les distances mesurées et des valeurs limites prédéfinies ;
les distances étant mesurées à l'aide du système radar (1).

4. Procédé selon la revendication 3, le procédé comprenant l'étape suivante:
- Émission d'un message d'avertissement et/ou arrêt de la machine électrique si la différence dépasse une limite prédéfinie.

5. Procédé de surveillance d'une machine électrique selon la revendication 1 ou 2, le procédé comprenant les étapes suivantes :
- Mesure d'une vibration du rotor (3) et/ou du stator (2) à l'aide du système radar (1) ;
- Comparaison des valeurs de vibration mesurées avec des valeurs limites prédéfinies ;

6. Procédé selon la revendication 5, le procédé comprenant l'étape suivante
- l'émission d'un message d'avertissement et/ou l'arrêt de la machine électrique lorsqu'une valeur de vibration mesurée dépasse une valeur limite prédéfinie.
